(19)

Europäisches
Patentamt

European
Patent Office

Office européen
des brevets

(11) **EP 3 429 049 A1**

(12) **EUROPEAN PATENT APPLICATION**

(43) Date of publication:
**16.01.2019 Bulletin 2019/03**

(21) Application number: **17180754.8**

(22) Date of filing: **11.07.2017**

(51) Int Cl.:
*H02J 3/00* (2006.01)  *G06Q 50/06* (2012.01)
*H02J 13/00* (2006.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Siemens Aktiengesellschaft
80333 München (DE)**

(72) Inventors:
• **Becher, Silvio
  81827 München (DE)**
• **Hubauer, Thomas
  85748 Garching bei München (DE)**
• **Solomakhina, Nina
  85652 Pliening (DE)**

(54) **A METHOD AND APPARATUS FOR CONTROLLING OF UTILITIES IN A MULTIMODAL UTILITY NETWORK**

(57) A method for distributing different utilities in a multimodal utility network (1) comprising several interconnected utility networks (2-i), wherein each utility network has network nodes (E1...H9) connected to each other through utility supply lines transporting the respective utility, wherein if a change in at least one of the utility networks affecting a topology of said multimodal utility network takes place, an operation of said multimodal utility network is automatically optimized according to at least one predetermined cost function of said multimodal utility network for the resulting changed topology utilizing available utility conversion capabilities of utility network nodes.

FIG 1

EP 3 429 049 A1

# Description

## TECHNICAL FIELD

The invention relates to a method and apparatus for distributing different utilities in a multimodal utility network comprising several interconnected utility networks.

## TECHNICAL BACKGROUND

Nowadays, rapidly growing cities, increased energy consumption and consequently increased impact on the ecological environment have promoted the usage of alternative energy sources and technologies with lower pollution rates as well as the optimization of energy production. As a consequence, urban utility networks become more complex and dependent on each other. Further, the operation, maintenance and management of utility networks becomes complex as well. A major task of each utility network is the efficient utility distribution. A utility can be a medium for transporting directly or indirectly energy within a multimodal utility network. Possible utilities comprise for instance a gas, a heated fluid and/or an electrical current for transporting energy. The flow of a utility within a utility network has to be managed such that the demands of consumers are satisfied with the existing supply of the respective utility. Conventional utility networks can normally respond to failures. Further, some energy is lost during transmission and distribution of utilities via utility networks. For example, in a utility network such as an electrical grid, up to 10% of the transported electrical power is lost in developed countries whereas in developing countries up to 35% of the transported energy can be lost. Moreover, urban exploitation of renewable energy sources, energy conversion, combined cycle and storage technologies has grown rapidly over the last years. As a result, utility networks have been becoming increasingly complex. A further consequence is that there appear more and more interconnections between different separate utility networks. These interdependencies between the different separate utility networks increase risks of cascading failures which may lead to blackouts of one or more utility networks such as an electrical grid. On the other hand, storage and energy conversion appliances allow to store excess energy and to perform conversion between different utilities.

Accordingly, there is a need to provide a method and apparatus for distributing different kinds of utilities in a multimodal utility network comprising several interconnected utility networks wherein the probability of failures leading to breakdown of an affected utility network is reduced.

## SUMMARY OF THE INVENTION

The invention provides according to a first aspect of the present invention a method for distributing different utilities in a multimodal utility network comprising several at least partially interconnected utility networks, wherein each utility network has network nodes connected to each other through utility supply lines transporting the respective utility,

wherein if a change in at least one of the utility networks affecting a topology of said multimodal utility network takes place, an operation of said multimodal utility network is automatically optimized according to at least one predetermined cost function of said multimodal utility network for the resulting changed topology utilizing available utility conversion capabilities of utility network nodes.

In a possible embodiment of the method according to the first aspect of the present invention, the utility transported through utility supply lines of a utility network of said multimodal utility network comprises a medium for transporting directly or indirectly energy within the multimodal utility network.

In a further possible embodiment of the method according to the first aspect of the present invention, the medium for transporting energy within the multimodal utility network comprises a gas, a fluid and/or an electrical current.

In a further possible embodiment of the method according to the first aspect of the present invention, in response to an observed or predicted change in at least one of the utility networks of said multimodal utility network, a rerouting of a flow of at least one medium is initiated automatically along a calculated optimal path which includes utility supply lines of the affected utility network and/or utility supply lines of the remaining interconnected utility networks.

In a still further possible embodiment of the method according to the first aspect of the present invention, the optimal path is calculated according to the predetermined cost function of said multimodal network depending on observed or predicted changes in at least one of the utility networks of said multimodal utility network.

In a still further possible embodiment of the method according to the first aspect of the present invention, the multimodal network comprises hybrid nodes forming part of at least two separate utility networks of said multimodal network wherein each hybrid node has a utility conversion capability to convert at least one utility received through at least one utility supply line from one or more source nodes of a first utility network into another utility supplied through at least one utility supply line to one or more destination nodes of a second utility network of said multimodal network. In a further possible embodiment of the method according to the first aspect of the present invention, a change which takes place in at least one utility network affecting the topology of the multimodal utility network is observed or predicted by evaluating sensor data generated by sensors of the utility network.

In a still further possible embodiment of the method according to the first aspect of the present invention, the change which takes place in at least one utility network affecting the topology of the multimodal utility network comprises a disturbance of a transport capacity of a utility supply line connecting two nodes of a utility network of said multimodal utility network.

In a still further possible embodiment of the method according to the first aspect of the present invention, the change which takes place in at least one utility network affecting the topology of the multimodal network comprises a disturbance of a utility generation capability and/or a disturbance of a utility storage capability and/or a disturbance of a utility consumption capability of at least one network node of the affected utility network of said multimodal utility network.

In a further possible embodiment of the method according to the first aspect of the present invention, the change which takes place in at least one utility network affecting the topology of the multimodal utility network comprises an environmental change of the utility network's environment.

In a still further possible embodiment of the method according to the first aspect of the present invention, the change which takes place in at least one utility network affecting the topology of the multimodal network comprises a parameter change of at least one network parameter of the respective utility network and/or a price change of a utility transported within the respective utility network.

In a still further possible embodiment of the method according to the first aspect of the present invention, the method is performed by a central utility distribution controller of said multimodal network.

In a still further possible alternative embodiment of the method according to the first aspect of the present invention, the method is performed by distributed local utility distribution controllers of network nodes of utility networks of said multimodal utility network.

In a still further possible embodiment of the method according to the first aspect of the present invention, in response to an observed or predicted change in at least one of the utility networks of said multimodal utility network, a utility generation unit of a network node of the utility network is activated automatically for generation of the respective utility.

In a still further possible embodiment of the method according to the first aspect of the present invention, in response to an observed or predicted change in at least one of the utility networks of the multimodal utility network, a utility consumption unit of a network node of the utility network is deactivated automatically for reducing a consumption of the respective utility.

In a still further possible embodiment of the method according to the first aspect of the present invention, the predetermined cost function of said multimodal utility network is selected and read from a local memory of a network node or from a central database.

In a further possible embodiment of the method according to the first aspect of the present invention, the cost function of said multimodal utility network comprises one or more criteria including utility distribution losses, required time for maintenance and/or repair of affected utility supply lines and/or maintenance and/or repair of network nodes of the utility network, environmental costs, in particular unwanted emissions or unwanted pollutions and/or utility network performance and/or utility network efficiency.

The invention further provides according to a second aspect a utility distribution controller used for controlling a distribution of different utilities in a multimodal utility network comprising several interconnected utility networks, wherein each utility network comprises network nodes connected to each other through utility supply lines adapted to transport the respective utility, wherein the utility distribution controller comprises:

a processor configured to calculate an optimal path including utility supply lines of the affected utility network in which a change affecting the topology of the multimodal utility network is observed and/or including utility supply lines of remaining other utility networks of said multimodal utility network interconnected to the affected utility network according to a predetermined cost function of said multimodal utility network for the resulting changed topology taking into account available utility conversion capabilities of utility network nodes of said multimodal utility network.

The invention further provides according to a third aspect a multimodal utility network comprising:

several interconnected utility networks each having network nodes connected to each other through utility supply lines adapted to transport the respective utility and comprising a utility distribution controller which has a processor configured to calculate an optimal path including utility supply lines of the affected utility network in which a change affecting the topology of the multimodal utility network is observed and/or including utility supply lines of remaining other utility networks of said multimodal utility network interconnected to the affected utility network according to a predetermined cost function of said multimodal utility network for the resulting changed topology taking into account available utility conversion capabilities of utility network nodes of said multimodal utility network.

In a possible embodiment of the multimodal utility network according to the third aspect of the present invention, the multimodal utility network further comprises switches and/or other actuators adapted to perform an automatic rerouting of a flow of media along the calculated optimal path and/or to perform an automatic activation of utility generation units and/or to perform an automatic deactivation of utility consumption units of network nodes of said multimodal utility network.

In a further possible embodiment of the multimodal utility network according to the third aspect of the present invention, the multimodal utility network comprises hybrid nodes forming part of at least two separate utility networks of said multimodal network wherein each hybrid node has a utility conversion capability to convert at least one utility received through at least one utility supply line from one or more source nodes of a first utility network into another utility supplied through at least one utility supply line to one or more destination nodes of a second utility network of said multimodal network.

In a still further possible embodiment of the multimodal utility network according to the third aspect of the present invention, a change which takes place in at least one utility network affecting the topology of the multimodal utility network is observed or predicted by evaluating sensor data generated by sensors of the multimodal utility network.

In a still further possible embodiment of the multimodal utility network according to the third aspect of the present invention, a change which takes place in at least one utility network affecting the topology of the multimodal utility network comprises a disturbance of a transport capacity of a utility supply line connecting two nodes of a utility network of said multimodal utility network.

In a still further possible embodiment of the multimodal utility network according to the third aspect of the present invention, the change which takes place in at least one utility network affecting the topology of the multimodal utility network comprises a disturbance of a utility generation capability and/or utility storage capability and/or utility consumption capability of at least one network node of the affected utility network of said multimodal utility network.

BRIEF DESCRIPTION OF FIGURES

In the following, possible embodiments of the different aspects of the present invention are described in more detail with respect to the enclosed figures.

Fig. 1    shows a schematic diagram of a possible exemplary embodiment of a multimodal utility network according to an aspect of the present invention;

Fig. 2    shows schematically a multigraph of a multimodal utility network as illustrated in Fig. 1;

Fig. 3    shows schematically a diagram for illustrating an example used for explaining the operation of a method and apparatus according to a possible exemplary embodiment of the present invention;

Fig. 4    illustrates a schematic diagram showing a disturbance affecting the utility network illustrated in Fig. 3 for explaining the operation of a method and apparatus according to an aspect of the present invention;

Fig. 5    shows a further schematic diagram illustrating a possible use case of a method and apparatus according to an aspect of the present invention.

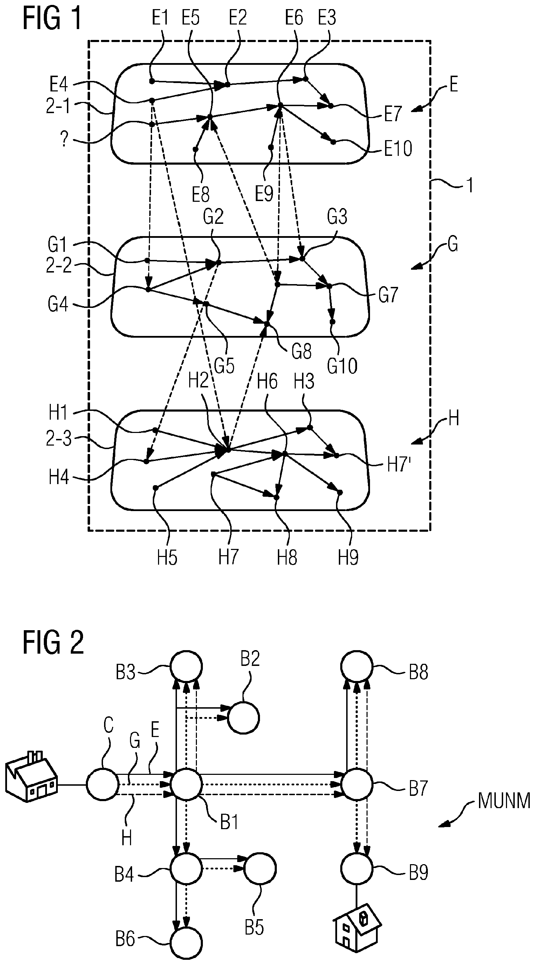

Fig. 1 shows schematically an example of a possible exemplary embodiment of a multimodal utility network 1 according to an aspect of the present invention. The multimodal utility network 1 comprises several interconnected utility networks 2-1, 2-2, 2-3 as illustrated in the schematic diagram of Fig. 1. The utility networks can be used to transport different kinds of utilities. In the specific example of Fig. 1, a first utility network 2-1 is used for transporting electricity E. A second utility network 2-2 of the multimodal utility network 1 is used in the illustrated example for transporting gas G. A third utility network 2-3 of the multimodal utility network 1 is used for transporting heating H. Accordingly, the multimodal utility network 1 comprises in the illustrated embodiment three interconnected utility networks 2-1, 2-2, 2-3. Each utility network 2-i has nodes connected to each other through utility supply lines transporting the respective utility. Each utility network 2-1, 2-2, 2-3 comprises a plurality of interconnected network nodes. In the illustrated example, the first utility network 2-1 comprises utility network nodes E1 to E10. Further, the second utility network 2-2 comprises utility network nodes G1 to G10. The third utility network 2-3 comprises in the illustrated embodiment utility network nodes H1 to H9. The different utility network nodes are connected through utility supply lines, for instance pipes for transporting gas G or power lines for transporting electricity E. If a change in at least one of the utility networks 2-i affecting the topology of the whole multimodal utility network 1 takes place, the operation of the multimodal utility network 1 is automatically optimized according to at least one predetermined cost function of the multimodal utility network 1 for the resulting changed topology utilizing available utility conversion capabilities of the utility network nodes E-i, G-i, H-i of the different interconnected utility networks 2-1, 2-2, 2-3. In a possible embodiment, the multimodal utility network 1 is represented by a corresponding multimodal utility network data model stored in a database. This model can be constructed using geographic information system data which may be provided for instance by a city administration or by energy providers. The multimodal utility network data model 1 can comprise a labeled multigraph allowing multiple edges between two nodes or vertices of the graph. The vertices of the multigraph can comprise buildings, substations and appliances or other objects of the utility network. The edges in the multigraph can represent in a possible embodiment water pipes or gas pipes, electricity connections or other utility network links. The multimodal utility network model stored in the database represents a physical topology of the different utility networks 2-i, i.e. the arrangement of its objects including its geographical locations and connectivity. Further, the multimodal utility network model represents interconnections between the different utility networks, i.e. objects that are shared by these different utility networks 2-i or which are significant for their respective operation. Energy conversion or cogeneration systems are examples for interconnections between different utility networks. Accordingly, the multimodal utility network 1 can comprise hybrid nodes forming part of different utility networks 2-i. For instance, a combined heat and power CHP can take gas G as input and produce electricity E and useful heat H as an output. Accordingly, a CHP substation is shared by three different utility networks 2-i. Further elements of the multimodal utility network model can comprise technical parameters and properties as well as topological and geographical features. These elements can be linked to corresponding objects represented by vertices and edges in the multigraph of the multimodal utility network model as illustrated in Fig. 1. If a change in at least one of the utility network 2-i affecting the topology of the whole multimodal utility network 1 takes place, the operation of the multimodal utility network 1 can be automatically optimized according to at least one cost function of the multimodal utility network for the resulting changed topology utilizing available utility conversion capabilities of utility network nodes. In a possible embodiment, the hybrid nodes forming part of at least two different utility nodes and having utility conversion capabilities can be used for rerouting utility flows within the multimodal utility network 1. For instance, for some consumer nodes, it might be more efficient to use conversions between different modalities or utilities than to satisfy its demand through the affected utility network 2-I where a disturbance has occurred.

Fig. 2 shows a specific example of a possible multigraph of a multimodal utility network model MUNM representing a multimodal utility network 1 as shown in Fig. 1. In the illustrated specific example, there are several consumer buildings B forming network nodes of different utility networks such as a first utility network 2-1 for transporting electricity E, a second utility network 2-2 for transporting gas G and a third utility network for transporting 2-3 heat H. A cogeneration plant illustrated by node C provides different utilities E, G, H which are supplied to a first consumer building node B1 as shown in Fig. 2. Some building blocks or network nodes get all three different utilities E, G, H whereas other buildings or utility network nodes do not receive all utilities as illustrated in the example of Fig. 2. For instance, building block B6 gets only gas G as a utility and electricity E as a utility, whereas building block B9 receives gas G as a utility and heat H as a utility.

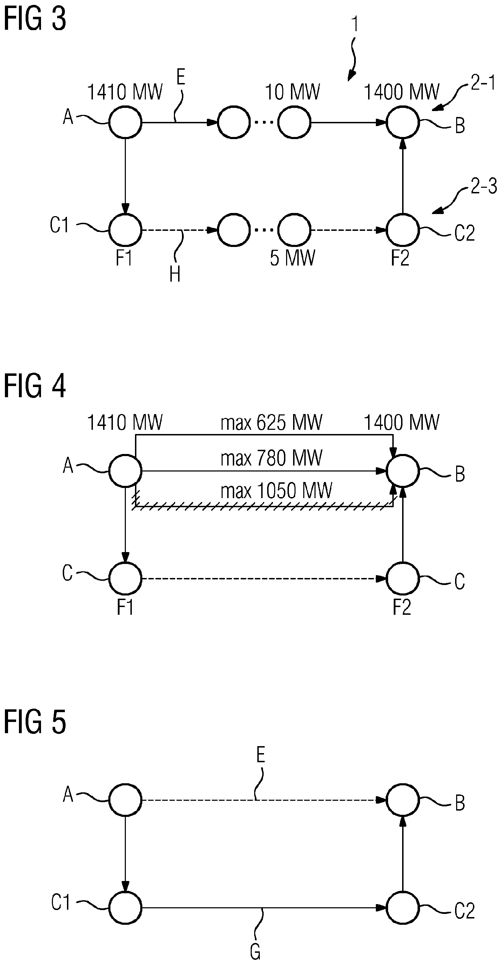

Fig. 3 depicts a further example of a multimodal utility network 1 consisting of two different utility networks, i.e. a first utility network 2-1 adapted to transport electricity E and a third utility network 2-3 adapted to transport heating H. A source node A generates in the illustrated example 1410 Megawatt of energy and a sink node B consumes 1400 Megawatt. The nodes C1, C2 are energy-conversion nodes. Fig. 3 shows a setting wherein it is more advantageous to convert a utility and to use connections of another utility network in order to reduce losses. In the illustrated example, a first conversion node C1 has a conversion factor F1 whereas the second energy conversion node C2 has a second conversion factor F2. The conversion performed by a conversion unit of a node can also be performed according to a conversion function:

$U_{out} = f(U_{in})$. The function can be linear or non-linear. The conversion can comprise multiple inputs utilities and/or multiple output utilities: $U_{out} = f(U_{in1}, U_{in2}, ...U_{inN})$. The controller has access to the functions f describing the conversion capabilities stored in a central database or a local memory. Similarly, in a case of failure in a utility network 2-i, conversions between energy can be performed in order to satisfy demands by evading damaged connections as illustrated in the example of Fig. 4. In the illustrated example, a connection between the source node A and the sink node B is damaged and the energy flow is rerouted using the conversion nodes C1 and C2 to meet the energy demand of sink node B. This approach is useful, for instance, if network properties of utility networks do change dynamically during operations, for instance due to overloading of an electrical grid line, partial leakage of a district heating line, etc. It can be beneficial to prefer conversion between utilities U using lines with low losses. The method according to the present invention performs the search for an optimal load allocation satisfying predetermined criteria. The method defines where interdependencies and conversion capabilities between utilities can be used efficiently for rerouting. In a possible embodiment, a utility distribution problem is formulated and optimized to satisfy predetermined criteria or cost functions of the multimodal network 1. This can be performed by a central utility distribution controller of the multimodal utility network 1 having in a preferred embodiment a data connection to the network nodes of the different utility networks 2-I, in particular to the hybrid nodes. In an alternative embodiment, the method is performed automatically by distributed local utility distribution controllers located at network nodes of different utility networks 2-I communicating with each other through a data network. This data network can comprise a computer data network such as the internet, and/or a telephone network.

The predetermined cost function can comprise one or several criteria including as criteria utility distribution losses, utility transport losses, a required time for maintenance or repair of an affected utility supply line and/or a required time for maintenance or repair of an affected network node of a utility network. The cost function of the multimodal utility network 1 can further comprise as criteria environmental costs, in particular unwanted pollutions or unwanted emissions. Further, the cost function of the multimodal network 1 can comprise a utility network performance and/or a utility network efficiency. Accordingly, the multimodal network 1 can comprise one or several associated predefined cost functions of different complexity. The predetermined cost functions can be used to optimize continuously or periodically the operation of the multimodal network 1 when a change in at least one utility network 2-i of the multimodal network 1 is observed, wherein the optimization is performed for the resulting change topology caused by the observed changed utilizing the available utility conversion capabilities of utility network nodes in the different utility networks 2-i of the multimodal utility network 1.

The multimodal network 1 can comprise multiple source nodes producing one or several utilities and multiple sink nodes consuming one or several utilities. Further, the multimodal network 1 comprises hybrid nodes having the capability to perform a conversion between different utilities U or commodities. The multimodal network 1 which is represented by a multimodal utility network model MUNM stored in a memory and evaluated by a central or distributed controller can take into account losses and gains during distribution of different utilities within different utility networks 2-i. In a possible embodiment, the method is adapted to perform a search for the best path for each vertex according to the set criteria of the cost functions. In a possible embodiment, a fat path is searched that satisfies the criteria in the best possible way by comparing it to other paths within the multimodal utility network 1. For example, the shortest path with the biggest capacity and the smallest losses can be found as a fattest path. These paths can be searched for each utility U in the whole multimodal utility network 1 considering hybrid nodes and corresponding paths in those utility networks 2-i, to which the initial utility of the affected utility network can be converted. Accordingly, some fattest paths can lie in the specific utility network 2-i affected by the change entirely or may consist of several parts across several different utility networks 2-i. Depending on the properties of connections between network nodes such as capacity or losses and depending on conversion characteristics for converting utilities, the calculated complex path can be more efficient and provide a higher performance than simple paths located in only one single affected utility network 2-i. Accordingly, if, for instance, a utility supply line between two network nodes of a first utility network forming a connection between the two network nodes is interrupted, a rerouting may be performed in the affected first utility network, for instance in the electricity distribution utility network 2-1, and if no rerouting is possible or if the rerouting within the same affected first utility network has a negative impact on properties of the affected utility network, a rerouting can be initiated to other second utility networks by using utility conversion capabilities of hybrid nodes forming part of the affected electricity distribution utility network 2-i and forming part of at least one other utility distribution network such as the utility network 2-2 for distributing gas G and/or the utility distribution network 2-3 distributing heat H. Different embodiments or implementations are possible. In a possible embodiment, rerouting within the affected utility network where the change is detected or observed, can take priority over rerouting using other utility networks. In an alternative embodiment, rerouting paths can be calculated without priorizing the affected utility network for rerouting. The conversion capabilities of hybrid node can be specified by a function f or equation system stored in a local or central memory and read by a controller for solving an optimization problem for a selected cost function.

The utility transported through utility supply lines or connections of a utility network of the multimodal utility network 1 can comprise different kinds of media for transporting directly and indirectly energy within the multimodal utility network 1. The media for transporting energy within the multimodal utility network 1 can for instance comprise gas G, heated fluid H and/or electrical current for transporting electrical energy E as also illustrated in Fig. 1.

In a possible embodiment, in response to an observed or predicted change in at least of the different utility networks 2-i, a rerouting of a flow of at least one medium is initiated automatically under control of a central or distributed controller along a calculated optimal path which includes in a possible embodiment utility supply lines or connections of the affected utility network where the change has occurred and/or of other remaining interconnected utility networks. In a possible embodiment, the optimal path can be calculated according to the predetermined or preconfigured cost function of the multimodal utility network 1 depending on the observed or predicted changes in at least one of the utility networks 2-i of said multimodal utility network 1. The calculation of the optimal path is performed in a possible embodiment by a central controller of the multimodal network 1 according to received data supplied by sensors to the controller in real time. Each utility network 2-i can comprise sensors measuring parameters of the respective utility supply network. These sensors can comprise for instance pressure sensors, temperature sensors or current meters, etc. This sensor data is supplied via a data network to the controller performing the calculation of optimal paths using preconfigured cost functions. The controller comprises a processor which performs the calculation of an optimal path in case that a change or disturbance in at least one utility network 2-i is detected, for instance, by a sensor. For instance, a leakage in a utility supply line between nodes can be detected or observed by a pressure sensor indicating a reduced pressure at the destination node. The processor of the controller has access to a memory or database wherein the multimodal utility network model MUNM is stored representing the multimodal utility network 1 and where additional network parameters and/or conversion functions are stored. Further geodata or location data of network nodes are stored in a memory and can be evaluated by the controller. On the basis of the multimodal utility network model MUNM and on the basis of the received sensor data, the controller is able to identify in a possible embodiment a location where a disturbance within a utility network 2-i has occurred which triggers the calculation of an optimal path for rerouting flows of media within the different utility networks of the multimodal utility network 1. In response to an observed simulated or predicted change in at least one utility network 2-i of the multimodal utility network 1, rerouting of a flow of at least one medium is initiated automatically in a possible embodiment along a calculated optimal path. This optimal path can include utility supply lines of the affected utility network where the disturbance has been observed and/or utility supply lines of the remaining other interconnected utility networks 2-i of the multimodal utility network 1.

In a possible embodiment, the optimal path is calculated by the processor of the controller according to the predetermined cost function of the multimodal utility network 1 depending on observed or predicted changes in at least one of the utility networks of said multimodal utility network 1. The multimodal utility network 1 comprises in a preferred embodiment one or several hybrid nodes forming part of at least two different separate utility networks. Each hybrid node has at least one utility conversion capability specified by a conversion factor F or by conversion function f to convert at least one utility $U_1$ received through at least one utility supply line from one or more source nodes of a first utility network 2i into another utility $U_2$ supplied through at least utility supply line to one or more destination nodes of a second utility network 2j of said multimodal network 1.

Changes can be detected or observed in a possible embodiment by evaluating sensor data supplied to the controller. Changes can also be notified by nodes in messages to the controller. In a possible embodiment, sensor data generated by sensors of different utility networks can be preprocessed locally and failures or changes can be notified to the controller through a data communication network. In the electrical grid also PLC communication between nodes and the controller is possible. The change which takes place in at least one utility network 2-i affecting the topology of the whole multimodal utility network 1 can be observed or even predicted by evaluating sensor data generated by sensors of the utility network. The evaluation of the sensor data can be performed locally by local processing units of the different utility networks or centrally by a central controller.

The change which takes place in at least one of the utility networks affecting the topology of the multimodal utility network can comprise a disturbance of a transport capacity of a utility supply line connecting at least two nodes of a utility network. A disturbance can be for instance an interruption or a leakage.

The change which takes place in at least one utility network affecting the topology of the whole multimodal network 1 can further comprise a disturbance of a utility generation capability. Further, the change can be a change of a utility storage capability of a network node. Moreover, the observed change can comprise a change of a utility consumption capability of a network node.

The change can comprise in a further embodiment an environmental change of the environment of the respective utility network 2-i. The environmental change can in a possible embodiment also be detected by evaluating sensor data. For instance, a temperature sensor can indicate an increase or decrease of temperature in the respective environment of the affected utility network. For instance, temperature can have an impact on the transport capabilities of an electrical grid forming an electricity distribution network.

Further, the change which takes place in at least one utility network which can affect the topology of the multimodal network 1 can comprise a parameter change of at least one utility network parameter UNP. For instance, a relevant parameter in a utility network distributing electrical energy E is the frequency f of the electrical grid. A change of this network parameter can trigger a rerouting under control of the controller. This rerouting can become necessary to stabilize the operation frequency f of the electricity distribution grid 2-1.

In a still further possible embodiment, the change which is observed may also include a price change of a utility U transported within the respective utility network. For instance, if the price of a utility of gas G is strongly increased, a rerouting may be performed to use more the utility supply network transporting heating H.

In response to an observed or predicted change in at least one of the utility networks 2-i of the multimodal utility network 1, a utility generation unit of a network node of the utility network can be activated automatically by the controller for generation of the respective utility. The utility generation unit can be for instance a photovoltaic system generating electricity from sun energy. Further, in response to an observed or predicted change in a utility network, the utility consumption unit of a network node of the utility network may be deactivated automatically for reducing consumption of the respective utility.

The method according to the first aspect of the present provides multiple advantages. By considering energy conversion capabilities and available connections or links in other utility networks for utility distribution, it is possible to distribute utilities separately in each utility network. A failure can affect not only one utility network where the failure is originated but also several utility networks which are interdependent with the original affected utility network. Accordingly, a failure or disturbance can affect the normal operation of several utility networks at the same time. With the method according to the present invention, it is possible to make use of energy conversion capabilities within hybrid nodes to increase the robustness of the multimodal utility network 1. Further, it is possible to minimize overall utility distribution losses and/or to satisfy other predetermined criteria by using energy conversion capabilities to reroute network flows. In case of an observed disturbance in the multimodal utility network 1, the method according to the first aspect of the present invention allows to reroute flows of media and to avoid damaged connections using available energy conversion units within network nodes and to distribute required utilities through other not affected utility transport networks. Smart cities are envisioned as cities with energy supply from renewable energy sources and cogeneration entities. Accordingly, urban utility networks have more energy conversion and storage appliances.

In a possible embodiment, a set of buildings B can be considered connected by urban utility services such as electric power cables, water pipelines or other facilities. A utility distribution network can be provided for each resource such as a network comprising water or gas pipelines, a district heating network, an electricity grid.

A utility distribution network 2-i is a system which is used to deliver utilities Uor resources from a producer node to a consumer node. The multimodal utility network 1 can be represented in a possible embodiment by a directed graph G, V, A, where producers and consumers can form a set of vertices $V = P \cup C$, where P denotes a set of producers, C denotes a set of consumers, and $S = P \cap C$ a set of prosumers. Distribution lines between vertices can be represented as a set of $A \subseteq V \times V$ of the graph G. The resource production or generation can mean the actual creation, for instance, of electricity, whereas for resources such as water or gas, the production can also mean the generation or building up of pressure.

The different utility networks 2-i are not isolated from each other. The utility networks 2-i can interact with each other and depend on each other. There can be different types of interdependencies between different utility networks. These interdependencies can comprise geographical interdependencies where elements of different utility networks 2-i either share the same facilities or are close to each other in terms of spatial proximity. Consequently, observed changes or disturbances in functioning of one utility network affects the other utility network. Further, there can be physical interdependencies between utility networks. This means, the functioning of a utility network and its elements depends on other utility networks. For instance, a water utility supply network is physically dependent from an electrical utility supply network, since water pumps and other facilities are electrically powered. Cogeneration appliances, e.g. combined heat and power CHP, that produce electricity E and heat H from one fuel forms an example for both geographical and physical interdependencies, since heat H and electricity E are produced from one fuel at the same place. A quantitative interdependency feature is a coupling order, i.e. a characteristic which describes whether utility networks are connected directly or through several intermediary utility networks. For instance, if a utility network 2-i is connected to a utility network 2-j, which in turn is connected to a utility network 2k, then although networks 2i and 2k are not connected directly, changes and events affecting utility network 2i might affect also utility network 2k as well. In this example, utility network 2i and utility network 2k have a second coupling order. An example for such utility networks is natural gas and district cooling. Heat produced from natural gas can be used for a heat-powered chiller to generate cooling. Feedback loops within the utility networks are also possible in case a network 2k is connected further to other networks which are further connected to the initial network 2i.

Accordingly, it is possible to identify and analyze such interdependencies between different utility networks. These interdependencies define the multimodal utility network 1 which forms a union of different utility networks 2 that includes all network graphs and additionally covers utility exchange between different utility networks. The multimodal utility network 1 is represented in a possible embodiment by a multidigraph, i.e. a directed graph that allows several arcs with the same source and target node. Multiple arcs are provided in order to avoid misconceptions, since e.g. two buildings in the network may be connected with distribution lines of different utilities. For example, having n utility networks $G_1(V_1, A_1),...,G_n(V_n, A_n)$, the multimodal network 1 can be represented as a multidigraph $G(V, A)$, where

$$V = \cup_{i=1}^{n} V_i, A = \cup_{i=1}^{n} A_i \cup A_l,$$ wherein $A_l$ is an additional set of arcs which describes interdependencies between utility networks $G_1(V_1, A_1),...,G_n(V_n, A_n)$. In more detail, for each arc or edge $a = (v_i, v_k) \in A_l$, the target vertex $v_k$ belongs to the network $G_k$ dependent from the network $G_i$ containing the source node $v_i$. The sets $V_1,...,V_n$ are not disjoint. They share not only consumers, such as residential buildings, but also hybrid nodes that belong to several utility networks. In a possible embodiment, an infrastructure dependency multigraph $G_l(V_l, A_l)$ can be calculated, where the vertex set $V_l$ consists of the utility networks $G_1(V_1, A_1),...,G_n(V_n, A_n)$ themselves. In other words, graph $G_l$ can depict interdependencies between different utility networks 2-i. However, the graph model alone only forms a coarse approximation of large complex utility networks. The graph does not cover most of some important characteristics such as network load and flow characteristics. Accordingly, the graph is in a possible embodiment enriched by values or multiple values assigned to its vertices and arcs.

In a preferred embodiment, apart from the topology represented by the network graph and its characteristics assigned as labels to each vertex and arc, there can also exist a large amount of time series information, such as sensor and smart meter measurements or sensor data, energy production and consumption values, energy losses, flow temperature, weather conditions and other dynamic data related to the daily functioning of the utility network. This data can be of different origins. The data can comprise real-world data and/or data generated by prediction models. The method accordingly allows an optimization-based predictive control, for instance of energy consumption. Further, the method provides in a possible embodiment a prediction of consumption of different utilities U for consumers and their aggregations. Further, the method allows depending on the applied cost function an exploration and assessment of the network's vulnerability or stability. By evaluating the stored network model G, it is possible to determine automatically vertices and arcs that might require improvements, for instance an overloaded transmission line or a producer with high production rate without connection or storage facilities. While conventional optimization and simulation models provide a strategy for optimizing utility flows for a more efficient usage of resources, information extracted from topology models can point to bottlenecks or directions of utility distribution. For instance, if a photovoltaic panel installed on a roof of a prosumer building produces excess electricity during an extremely sunny day, the task of optimization is to determine a more profitable solution. This can comprise the storage for later usage depending on the appropriate facilities in a building or to sell the energy to a network provider or to neighbors. Further, it is possible to convert the generated utility into another utility. For instance, the produced electricity can be used to heat water. On the other hand, neighbors or neighboring network nodes can choose what is better for them. The consumer node can continue to buy electricity from the network or to use the energy generated by its own photovoltaic panel. In all these different use cases, path and flow analysis performed by a processor of a controller on the basis of the stored multimodal utility model improves optimization to distribute the energy in the different utility networks in a cost- and energy-efficient way using an optimal calculated path for transporting the energy.

With the method according to the present invention, it is further possible to perform a vulnerability or robustness analysis. Such a network vulnerability analysis is of interest, in particular in view of possible large energy blackouts, where a single failure can trigger shutdowns of major infrastructure networks. There are two main categories of failures that can affect utility infrastructures, i.e. cascading and common cause failures. A failure is common cause if two or more utility networks 2-i are disrupted at the same time due to the same cause or reason such as a natural or man-made disaster. This kind of failure is typically local and affects utility networks that are geographically interdependent. A failure is called cascading if it disrupts one utility network and initiates a chain reaction of further failures in dependent utility networks. This kind of failure may affect not only those utility networks that are directly physically dependent from the initially disrupted affected network, but also networks that have n-th coupling order with the initial utility network and cause n-th order effects. By evaluating the graph-theoretical model of utility networks forming part of a multimodal utility network 1, it is possible to analyze cascading and/or common cause failures. Firstly, the dependency multigraph of the multimodal utility network model MUNM stored in the database provides itself an understanding of the n-th order coupling effects between different utility networks 2-i and can be used to predict consequences of a disruption or failure in a specific affected utility network or other interdependent utility networks. Further, evaluating a connectivity and vertex degree of the dependency multigraph can contribute to a better understanding of a failure propagation. For example, it can be analyzed automatically what happens if a vertex, arc or set of vertices and arcs are disrupted, e.g. deleted from a utility network. Further, it can be analyzed how to restore network functioning as soon as possible in response to an observed failure. The multimodal utility network model MUNM comprising the multidigraph G allows to find efficiently bypasses between network nodes by using optimization models or cost functions to redistribute the flows efficiently.

The method according to the first aspect of the present invention can further be used for planning future utility networks in view of vulnerability and optimization tasks. The method according to the present invention can also be used to improve maintenance of utility networks 2-i. Sensors and smart meters of utility networks can produce huge amount of measurement or sensor data. Processing this data to extract information regarding network functioning and compiling statistics can be performed. This can largely contribute to other tasks, in particular to condition monitoring, optimization control and vulnerability analysis. The sensor data processing can be descriptive, i.e to describe what happens in the utility network such as failures or unusual events and to summarize network functioning characteristics. The sensor data processing can also be diagnostic, i.e. to explain why certain events have occurred, e.g. peaks or trends. For the diagnostic processing, it is essential to know the location of the sensors in the utility network and whether their measurements or data does correlate or influence each other. Assigning to each arc or vertex information on sensors and meters installed there as well as links to the database with measurement tables does allow easier combination of graph and exploratory analysis for achieving better results.

The invention provides according to a further aspect a utility distribution controller adapted to perform the method according to the first aspect of the present invention. The utility distribution controller can be a central controller for the whole multimodal utility network 1 or can be a distributed local utility distribution controller communicating with other controllers via a data network. The utility distribution controller can comprise in a possible embodiment a processor configured to calculate an optimal path including utility supply lines or links of the affected utility network in which a change affecting the topology of the multimodal utility network 1 has been observed and/or including also utility supply lines or links of other remaining not affected utility networks of the multimodal utility network 1. The calculation of the optimal path is performed in a preferred embodiment by the processor according to a preconfigured cost function of the multimodal utility network 1 comprising one or several optimization criteria for the resulting changed topology of the multimodal utility network 1 taking into account available utility conversion capabilities of one or several utility network nodes of the same or different multimodal utility networks. The invention further provides according to a third aspect a multimodal utility network 1 comprising at least one utility distribution controller according to the second aspect of the present invention.

In a further possible embodiment, the multimodal utility network 1 and its hybrid nodes are used in order to distribute loads more evenly and thereby using network facilities efficiently to reduce overloads, for instance in utility network peaks. A danger of overloads between node A and node B can usually occur during a demand peak as shown in Fig. 5. In a possible embodiment of the method, utilities are distributed using different paths including converting a utility to another utility and using the distribution lines in the other not affected utility networks. Fig. 5 schematically depicts this embodiment. In case of a danger, overload electricity can be for instance converted to a gas fuel (power to gas) by a utility conversion unit of node C1 and this fuel is further used to generate electricity by node C2 to cover an electricity demand. This technique can additionally be used in order to store or dispose excess of utilities U using available conversion capabilities. In order to explore possible ways for shifting loads, an optimization problem on a multimodal utility network model graph can be formulated and solved automatically by a processor of a controller. Each connection between network nodes can be expressed by several constraints. These constraints can comprise a capacity constraint describing how much utility can be transported a first load constraint describing when (at which percentage of capacity) a danger of overload appears and/or a second load constraint describing an optimal load value and/or a flow capacity describing losses on this connection. For each network node of the multimodal utility network 1, there are constraints describing its production and consumption of utilities U wherein the number depends on the number of utility networks the hybrid network node is connected to. For hybrid network nodes, there can be additional constraints determining characteristics of utility conversion processes. Having a multimodal utility network 1 and using its model to get the network structure or topology and having the location of the hybrid nodes and further network parameters and characteristics, all constraints can be expressed in a possible embodiment as linear equations and constraints. An objective of this optimization problem is to provide optimal load values across all connections. It is possible to assign penalties for violation of second load constraints (e.g. overshooting of optimal load values). In a possible embodiment, a penalty value is minimized to determine no values for connections and conversion values for hybrid nodes of the different utility networks.

In the illustrated example of Fig. 5, source node A is connected to a sink node B in a first utility network, e.g. a utility network transporting electricity E. The source node A is connected to an energy conversion hybrid node C1 and the sink node B is connected to a second energy conversion node C2 forming also a hybrid node. If a danger of overload of the interconnection between source node A and sink node B is detected or observed or predicted, an alternative path can be calculated and a rerouting can be performed. In the specific example of Fig. 5, the original utility transport path can be an electric cable for transporting electricity E directly from the source node A to the sink node B. If by evaluating sensor data a danger of overload of the electricity transport connection line is observed, an alternative path can be calculated, e.g. to the connection line between the energy conversion node C1 and the energy conversion node C2. In the illustrated example, the utility network used for bypassing the affected overloaded electric power transport line is through the gas utility transport network connected to the power supply grid transporting electricity between network nodes A and B. The energy conversion nodes C1, C2 forming hybrid nodes are used to avoid an overloading of the electrical connection between source node A and sink node B. In this embodiment, energy conversion units and connections in other utility networks are used to lessen the load of nodes and connections in affected networks, e.g. an electricity distribution utility network. This can be used to cut off load peaks that may otherwise put potentially hazardous stress on the affected utility network leading to increased losses and costs. Usually, the worst possible peak load can determine the dimension of network elements such as transformers or switchgear. In this embodiment, it is possible to reduce the peaks in general so that the dimension of the network elements can be reduced. This approach can also help to make a better use of storage facilities within a utility network. For instance, an excess of energy can be used to generate hydrogen which is then stored in a gas pipeline system which can be used later on to produce energy when needed.

Overloading facilities of the utility networks 2i can cause failures. These failures might affect also those utility networks which are interdependent with it. Therefore, a failure or disturbance might affect operation of several utility networks. With the method according to the present invention, it is possible to increase robustness of the whole multimodal utility network 1 against those failures. With the method, it is possible to make efficient use of network facilities and to provide a load balancing within the same utility network or a load balancing between different utility networks. Overloading connections in one utility network can be avoided by using energy conversion capabilities and actions in other utility networks. The conversion and storage appliances allow using converted excess energy in order to use or store it in another energy form. With the method according to the present invention, it is possible to find an optimal solution taking into account all demands and supply information in different utility networks and all available possibilities or connections to transfer, convert or store energy. In case of observed failures or disturbances in a utility network, the method according to the present invention allows to reroute the flows and to avoid damaged connections using available energy conversion units and distributing utilities through other utility networks. During a planning phase of building or expanding utility networks, it is possible with the present method to take into account plant and existing hybrid nodes and their characteristics as well as vulnerability measures of interdependent utility networks. In this way, most cost-efficient solutions are possible. For example, by using the method according to the present invention, smaller transformers can be provided in an electricity supply utility network and in the case of peaks, other utility networks can be used to meet the peak demand.

The method according to the present invention can be performed by a processor of a controller on the basis of the provided information data, in particular the multimodal utility network model and received sensor data in real time. The controller can control one or several actuators in the same or different utility networks. These actuators can comprise switches or other actuators which allow a rerouting of utility flows. Further, the controller can control utility consumption units and/or utility generation units in different utility networks. In this way, an operation of the multimodal utility network is automatically optimized according to the predetermined cost functions evaluated by the processor. In a further possible embodiment, the controller can employ self-learning and machine-learning approaches to improve the performance. For instance, a neural network can be trained on sensor data. On the basis of the multimodal utility network model MUNM, the controller can further in a possible embodiment identify the origin of a failure or disturbance observed in the multimodal utility network 1, e.g. a disrupted network node or a disrupted utility supply line. By identifying the origin and/or location of the disturbance, countermeasures can be performed efficiently. For instance, a user can be directed to the identified location where the disturbance has occurred to fix the failure or disturbance. After the observed disturbance has been eliminated, the topology of the multimodal utility network 1 changes again triggering a rerouting.

The number of utility networks 2i forming part of the multimodal utility network 1 can vary depending on the use case. For instance, in a chip manufacturing factory, a plurality of different utility supply networks can be provided. These utility networks can for instance transport different kinds of gases or materials necessary for producing integrated chips. Moreover, in such a production facility comprising several utility transport networks, each node can be formed by a production element for performing a manufacturing step in the manufacturing process. The production facility can accordingly comprise several utility networks 2-i for different gases or other materials as well as utility networks for distributing electrical energy E or other resources necessary for the production. Accordingly, the invention further provides a production facility for manufacturing a product comprising a multimodal utility network 1 according to an aspect of the present invention as illustrated in Fig. 1. In a further possible embodiment, the multimodal utility network model 'MUNM of the multimodal utility network 1 as shown in Fig. 1 can be displayed to a user by a graphical user interface. Observed disturbances can be displayed to the user and possible optimal rerouting paths can be calculated and also output to the user. In a possible implementation, different optimal paths can be calculated and displayed to the user who may select a most suited optimal reroute path to bypass the observed disturbance. In a further possible implementation, a priority can be assigned to different network nodes of the different utility networks. For instance, in the graph shown in Fig. 2, the supply of a specific building such as building B3 can be more important than the supply of another building such as building B7. In this implementation, the optimal path is calculated such that the supply of building B3 is maintained under all circumstances. The method and apparatus according to the present invention can be used for any kind of multimodal network 1 having at least two different utility networks 2-i transporting different utilities U between network nodes. These network nodes can comprise for instance buildings B but also e.g. machines of a factory or production facility.

## Claims

1.  A method for distributing different utilities in a multimodal utility network comprising several interconnected utility networks, wherein each utility network has network nodes connected to each other through utility supply lines transporting the respective utility, wherein if a change in at least one of the utility networks affecting a topology of said multimodal utility network takes place, an operation of said multimodal utility network is automatically optimized according to at least one predetermined cost function of said multimodal utility network for the resulting changed topology utilizing available utility conversion capabilities of utility network nodes.

2.  The method according to claim 1 wherein the utility transported through utility supply lines of a utility network of said multimodal utility network comprises a medium for transporting directly or indirectly energy within the multimodal utility network.

3.  The method according to claim 2 wherein the medium for transporting energy within the multimodal utility network comprises a gas, a fluid and/or an electrical current.

4. The method according to claim 1 wherein in response to an observed or predicted change in at least one of the utility networks of said multimodal utility network, a rerouting of a flow of at least one medium is initiated automatically along a calculated optimal path which includes utility supply lines of the affected utility network and/or utility supply lines of the remaining interconnected utility networks of said multimodal utility network.

5. The method according to claim 4 wherein the optimal path is calculated according to the predetermined cost function of said multimodal utility network depending on observed or predicted changes in at least one of the utility networks of said multimodal utility network.

6. The method according to claim 1 wherein the multimodal network comprises hybrid nodes forming part of at least two separate utility networks of said multimodal network wherein each hybrid node has a utility conversion capability to convert at least one utility received through at least one utility supply line from one or more source nodes of a first utility network into another utility supplied through at least one utility supply line to one or more destination nodes of a second utility network of said multimodal utility network.

7. The method according to claim 1 wherein a change which takes place in at least one utility network affecting the topology of the multimodal utility network is observed or predicted by evaluating sensor data generated by sensors of the utility network.

8. The method according to claim 1 wherein the change which takes place in at least one utility network affecting the topology of the multimodal utility network comprises a disturbance of a transport capacity of a utility supply line connecting two nodes of a utility network of said multimodal utility network or wherein the change which takes place in at least one utility network affecting the topology of the multimodal network comprises a disturbance of a utility generation capability and/or utility storage capability and/or utility consumption capability of at least one network node of the affected utility network of said multimodal utility network.

9. The method according to claim 1 wherein the change which takes place in at least one utility network affecting the topology of the multimodal network comprises an environmental change of the utility network's environment.

10. The method according to claim 1 wherein the change which takes place in at least one utility network affecting the topology of the multimodal network comprises a parameter change of at least one network parameter of the respective utility network and/or a price change of a utility transported within the respective utility network.

11. The method according to claim 1 wherein the method is performed by a central utility distribution controller of said multimodal network or performed by distributed local utility distribution controllers of network nodes of utility networks of said multimodal utility network.

12. The method according to claim 1 wherein in response to an observed or predicted change in at least one of the utility networks of said multimodal utility network, a utility generation unit of a network node of the affected utility network is activated automatically for generation of the respective utility and/or a utility consumption unit of a network node of the affected utility network is deactivated automatically for reducing consumption of the respective utility.

13. The method according to claim 1 wherein the predetermined cost function of said multimodal utility network is selected and read from a local memory or from a central database.

14. The method according to claim 1 wherein the cost function of said multimodal utility network comprises criteria including
utility distribution loss, and/or
a required time for maintenance and/or repair of affected utility supply lines and/or affected network nodes of the utility network, and/or
environmental costs, in particular unwanted emissions, and/or utility network performance and utility network efficiency.

15. A utility distribution controller used for controlling a distribution of different utilities in a multimodal utility network comprising several interconnected utility networks, wherein each utility network comprises network nodes connected to each other through utility supply lines adapted to transport the respective utility,
wherein the utility distribution controller comprises:

a processor configured to calculate an optimal path including utility supply lines of an affected utility network in which a change affecting the topology of the multimodal utility network is observed and/or including utility supply lines of remaining other utility networks of said multimodal utility network interconnected to the affected utility network according to a predetermined cost function of said multimodal utility network for the resulting changed topology taking into account available utility conversion capabilities of utility network nodes of said multimodal utility network.

16. A multimodal utility network comprising:

several interconnected utility networks each having network nodes connected to each other through utility supply lines adapted to transport the respective utility and comprising a utility distribution controller which has a processor configured to calculate an optimal path including utility supply lines of an affected utility network in which a change affecting the topology of the multimodal utility network is observed and/or including utility supply lines of remaining other utility networks of said multimodal utility network interconnected to the affected utility network according to a predetermined cost function of said multimodal utility network for the resulting changed topology taking into account available utility conversion capabilities of utility network nodes of said multimodal utility network.

17. The multimodal utility network according to claim 16 wherein the multimodal utility network further comprises switches and/or other actuators adapted to perform an automatic rerouting of a flow of media along the calculated optimal path and/or to perform an automatic activation of utility generation units and/or to perform an automatic deactivation of utility consumption units of network nodes of said multimodal utility network.

18. The multimodal utility network according to claim 16 wherein the multimodal utility network comprises hybrid nodes forming part of at least two separate utility networks of said multimodal network wherein each hybrid node has a utility conversion capability to convert at least one utility received through at least one utility supply line from one or more source nodes of a first utility network into another utility supplied through at least one utility supply line to one or more destination nodes of a second utility network of said multimodal network.

19. The multimodal utility network according to claim 16 wherein a change which takes place in at least one utility network affecting the topology of the multimodal utility network is observed or predicted by evaluating sensor data generated by sensors of the multimodal utility network.

20. The multimodal utility network according to claim 16 wherein a change which takes place in at least one utility network affecting the topology of the multimodal utility network comprises a disturbance of a transport capacity of a utility supply line connecting two nodes of a utility network of said multimodal utility network or wherein the change which takes place in at least one utility network affecting the topology of the multimodal utility network comprises a disturbance of a utility generation capability and/or utility storage capability and/or utility consumption capability of at least one network node of the affected utility network of said multimodal utility network.

FIG 1

FIG 2

## FIG 3

## FIG 4

## FIG 5

Europäisches
Patentamt

European
Patent Office

Office européen
des brevets

# EUROPEAN SEARCH REPORT

Application Number

EP 17 18 0754

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/073098 A1 (GAN ZHONGXUE [CN] ET AL) 21 March 2013 (2013-03-21)<br>* abstract *<br>* page 2, paragraph 20 - page 4, paragraph 60 *<br>* page 5, paragraph 74 - page 6, paragraph 96; figures 2-4 *<br>* page 11, paragraph 167 *<br>* page 13, paragraph 197 *<br>----- | 1-20 | INV.<br>H02J3/00<br>G06Q50/06<br><br>ADD.<br>H02J13/00 |
| X | US 2015/286973 A1 (BECHER SILVIO [DE] ET AL) 8 October 2015 (2015-10-08)<br>* abstract *<br>* page 1, paragraph 5 - page 2, paragraph 17 *<br>----- | 1-20 | |
| A | US 2013/226358 A1 (RUDKEVICH ALEKSANDR [US] ET AL) 29 August 2013 (2013-08-29)<br>* abstract *<br>* page 2, paragraph 19 - paragraph 20; figure 1 *<br>* page 3, paragraph 29 - page 4, paragraph 44; figures 2-5 *<br>* page 6, paragraph 74 *<br>----- | 1-20 | |

TECHNICAL FIELDS
SEARCHED (IPC)

H02J
G06Q

The present search report has been drawn up for all claims

| Place of search | Date of completion of the search | Examiner |
|---|---|---|
| Munich | 10 January 2018 | Mäki-Mantila, Harri |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 17 18 0754

This annex lists the patent family members relating to the patent documents cited in the above-mentioned European search report.
The members are as contained in the European Patent Office EDP file on
The European Patent Office is in no way liable for these particulars which are merely given for the purpose of information.

10-01-2018

| Patent document cited in search report | | Publication date | Patent family member(s) | | Publication date |
|---|---|---|---|---|---|
| US 2013073098 | A1 | 21-03-2013 | CN 102236349 A | | 09-11-2011 |
| | | | US 2013073098 A1 | | 21-03-2013 |
| | | | WO 2011134430 A1 | | 03-11-2011 |
| US 2015286973 | A1 | 08-10-2015 | CN 104781838 A | | 15-07-2015 |
| | | | DE 102012221291 A1 | | 22-05-2014 |
| | | | EP 2904554 A1 | | 12-08-2015 |
| | | | US 2015286973 A1 | | 08-10-2015 |
| | | | WO 2014079605 A1 | | 30-05-2014 |
| US 2013226358 | A1 | 29-08-2013 | CA 2865286 A1 | | 29-08-2013 |
| | | | EP 2817681 A2 | | 31-12-2014 |
| | | | US 2013226358 A1 | | 29-08-2013 |
| | | | WO 2013126821 A2 | | 29-08-2013 |

EPO FORM P0459

For more details about this annex : see Official Journal of the European Patent Office, No. 12/82